# EUROPEAN PATENT APPLICATION

(11) **EP 2 538 171 A1**
(43) Date of publication of application: **26.12.2012**
(21) Application number: 11828505.5
(22) Date of filing: 24.03.2011
(51) Int. Cl.: G01C 3/00, G01B 11/00, G01C 3/06, G01S 7/48, G01S 17/48

(54) **METHOD FOR ADJUSTING FLOODLIGHT BEAM**

(30) Priority: 30.09.2010 JP 2010222237
(71) Applicant: Omron Corporation, Kyoto-shi, Kyoto 600-8530 (JP)
(72) Inventor: YAMAKAWA, Kenta, Kyoto 600-8530 (JP); ICHIYANAGI, Hoshibumi, Kyoto 600-8530 (JP)
(74) Representative: Horn Kleimann Waitzhofer
(86) International application number: PCT/JP2011/057136
(87) International publication number: WO 2012/042943

(57) **Abstract**

An optical displacement sensor (10) which uses a Scheimpflug optical system comprises: a projection module (9) for emitting light to an object to be measured; a light-receiving portion (13) for receiving the reflected light on a light-receiving face when the light from the projection module (9) is reflected by the object to be measured; and a light-receiving lens (14) for focusing the reflected light on the light-receiving face, the light-receiving lens being positioned between the object to be measured and the light-receiving portion (13). A method for adjusting a projection beam adjusts the focal position of the light emitted from a light source (11) so that the size of an image formed on the light-receiving portion (13) is constant irrespective of the distance between the projection lens (12) constituting the projection module (9) and the object to be measured.

## Description

### TECHNICAL FIELD

The present invention relates to a method for adjusting a projection beam of an optical displacement sensor, and particularly relates to a method for adjusting a projection beam of an optical displacement sensor in which the measurement precision can be consistent.

### BACKGROUND ART

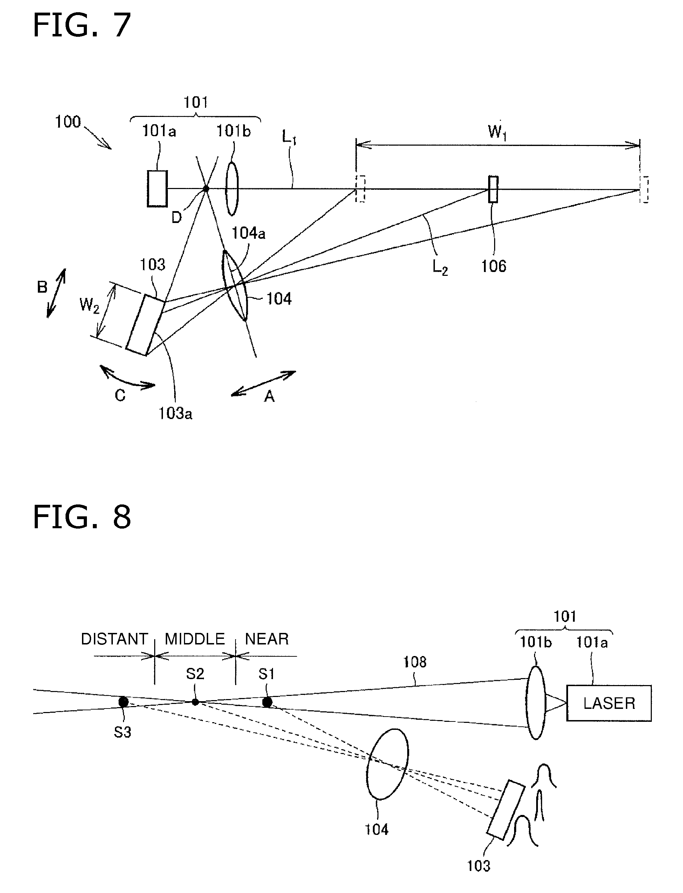

A conventional optical displacement sensor is disclosed in Japanese Laid-open Patent Publication No. 2008-145160 (Patent Citation 1), for example. FIG. 7 is a view showing the conventional optical displacement sensor 100 disclosed in Patent Citation 1. As shown in FIG. 7, the optical displacement sensor 100 is provided with a projection module 101 which includes a laser diode 101a for radiating light to an object to be measured 106, and a projection lens 101b for collecting light from the laser diode 101a; a CCD 103 for receiving the reflected light on a light-receiving face 103a when the light from the projection module 101 is reflected by the object to be measured 106; and a light-receiving lens 104 for imaging the reflected light on the light-receiving face 103a of the CCD 103.

When light is radiated toward the object to be measured 106 from the laser diode 101a, the radiated light is reflected by the object to be measured 106, and the reflected light is received by the light-receiving face 103a of the CCD 103 via the light-receiving lens 104, and the optical displacement sensor 100 thereby measures the displacement of the object to be measured 106 on the basis of the position of an image formed by the received light.

Here, the light from the laser diode 101 is projected to the object to be measured 106 through the projection lens 101b. The projected light rays passed through the projection lens 101b are referred to as a projection beam.

### CITATION LIST

### PATENT LITERATURE

(Patent Citation 1) Japanese Laid-open Patent Publication No.2008-145160

### SUMMARY OF INVENTION

### < Technical Problem >

The arrangement of the projection module 101, the CCD 103, and the light-receiving lens 104 is adjusted so that the Scheimpflug condition is met. Specifically, the light-receiving face 103a of the CCD 103 has a predetermined width W₂, and the reflection position of an object in the range in which reflected light can be received by the light-receiving face 103a has a predetermined width W₁ on the optical axis of the laser diode 101a, i.e., the projection axis L₁. The arrangement of the abovementioned components is adjusted so that lines extending from the reflection position, the light-receiving face 103a, and a principal face 104a of the light-receiving lens 104 intersect at a single point D. By this adjustment, the image formed by the reflected light is in focus over the entire light-receiving face 103a irrespective of the position along the predetermined width W₁ at which the light is reflected.

FIG. 8 is a schematic view showing the spot diameters S1 - S3 of a projection beam 108 at the position of an object to be measured, and the sizes of images formed on the CCD 103 by the reflections of the spot diameters S1 to S3 in the optical system of a conventional displacement sensor in which the arrangement of the optical system is adjusted so as to meet the Scheimpflug condition. Three cases are considered here, in which the object to be measured is near from the projection lens 101b (labeled "near" in the drawing), distant from the projection lens (labeled "distant" in the drawing), and at a middle position (labeled "middle" in the drawing). In the conventional technique, since the focal point of the projection beam 108 is set on the projection lens 101b side of the middle position, the projection beam 108 is as shown in FIG. 8. As a result, the largest spot diameter S1 occurs when the object to be measured is near from the projection lens 101b, the slightly smaller spot diameter S3 occurs when the object to be measured is distant from the projection lens, and the smallest spot diameter S2 occurs when the object to be measured is at the middle position. When these spot diameters S1 - S3 are imaged through the light-receiving lens 104 onto the CCD 103, the width of the image is largest when the object to be measured is near from the light source, the smaller image occurs when the object to be measured is distant from the light source, and the image is smallest when the object to be measured is at the middle position. The reason for this is that the image size is determined by the product of the spot diameter and the magnification. The magnification is, in the optical system shown in FIGS. 7 and 8, the optical magnification determined by the ratio of the size of the image formed on the CCD 103 to the spot diameter S1 - S3 of the object to be measured.

For example, when the spot diameter S1 of the near case is 2, S2 of the middle case is 1, and S3 of the distant case is 2.0. The optical magnification, however, is approximately 0.3x in the near case, 0.25x in the middle case, and 0.2x in the distant case, for example. From these values, the image size is 0.6 in the near case, 0.25 in the middle case, and 0.4 in the distant case. This state is shown in Table 1.

**[Table 1]**

| Spot diameter | | Magnification | Image size |
|---|---|---|---|
| S1 (near): | 2.0 | 0.3 | 0.6 |
| S2 (middle): | 1.0 | 0.25 | 0.25 |
| S3 (distant): | 2.0 | 0.2 | 0.4 |

Here, the optical magnifications are shown to be approximately 0.3x in the near case, 0.25x in the middle case, and 0.2x in the distant case, and the optical magnifications have basically these ratios in this Scheimpflug optical system.

In an optical displacement sensor, the measurement position is easier to accurately detect when the image is formed across a plurality of photodiodes constituting the CCD 103.

Consequently, it is no longer apparent whether an image actually exists when the size (width) of the image on the photodiodes is small. Specifically, since the spot diameter varies according to the measurement position in the conventional method for adjusting a projection beam, the size of the image on the CCD fluctuates. As a result, problems arise in that the measurement precision fluctuates.

The present invention was developed to overcome the problems described above, and an object of the present invention is to provide a method for adjusting a projection beam in an optical displacement sensor that uses a Scheimpflug optical system, in which the measurement precision is consistent.

### < Solution to Problem >

A method for adjusting a projection beam according to a first aspect of the present invention relates to a method for adjusting a projection beam of an optical displacement sensor having a projection lens configured to project light onto an object to be measured. The optical displacement sensor has a light-receiving portion configured to receive reflected light reflected by the object to be measured and a light-receiving lens configured to image the reflected light onto a light-receiving face, the light-receiving lens being positioned between the object to be measured and the light-receiving portion. The projection lens, the light-receiving portion, and the light-receiving lens are arranged so that the Scheimpflug condition is met. The method for adjusting a projection beam adjusts the focal position of light emitted from the projection lens so that a size of an image formed on the light-receiving portion by the reflected light is constant irrespective of the distance between the projection lens and the object to be measured.

Preferably, the projection beam is a laser beam.

The size of the image is determined by the product of a spot diameter of the object to be measured and an optical magnification determined according to a ratio of the size of the image formed on the light-receiving portion to the spot diameter of the object to be measured, the spot diameter being formed by the projection beam.

Preferably, the step of adjusting the focal position of light emitted from a light source so that the size of the image formed on the light-receiving portion is constant irrespective of the distance between the light source and the object to be measured includes a step for performing an adjustment so that the image formed on the light-receiving portion has a size to be formed on at least three or more photodiodes among a plurality of photodiodes constituting the light-receiving portion.

A method for adjusting a projection beam according to a second aspect of the present invention relates to a method for adjusting a projection beam of an optical displacement sensor having a projection lens configured to project light onto an object to be measured. The optical displacement sensor has a light-receiving portion configured to receive reflected light reflected by the object to be measured and a light-receiving lens configured to image the reflected light onto a light-receiving face, the light-receiving lens being positioned between the object and the light-receiving portion; and the projection lens, the light-receiving portion, and the light-receiving lens are arranged so that the Scheimpflug condition is met. The focal position of light emitted from the projection lens is adjusted so that an image formed on the light-receiving portion by the reflected light has a size to be formed on a plurality of photodiodes constituting the light-receiving portion irrespective of the distance between the projection lens and the object to be measured.

### <Advantageous Effects of Invention>

The method for adjusting a projection beam according to the present invention adjusts the focal position of light emitted from the projection lens so that the size of the image formed on the light-receiving portion by the reflected light from the object to be measured is constant irrespective of the distance between the projection lens and the object to be measured.

As a result, a method for adjusting a projection beam can be provided in which the measurement precision is consistent.

### BRIEF DESCRIPTION OF THE DRAWINGS

FIG. 1 is a perspective view showing the outside of the optical displacement sensor.
FIG. 2 is a plan view from the direction of the arrow II in FIG. 1, showing a case in which the cover of the optical displacement sensor shown in FIG. 1 is removed.
FIG. 3 is a perspective view showing the projection lens.
FIG. 4 is a perspective view showing the light-receiving lens.
FIG. 5 is a schematic view showing the optical displacement sensor.
FIG. 6 is a view showing the relationship between the size of the spot diameter at each measurement position and the size of the image formed on the light-receiving portion in the present embodiment.
FIG. 7 is a view showing the conventional optical displacement sensor disclosed in Patent Citation 1.
FIG. 8 is a view showing the image states and spot diameters for positions of the object to be measured in a conventional optical system of a displacement sensor in which the Scheimpflug condition is met.

### DESCRIPTION OF EMBODIMENTS

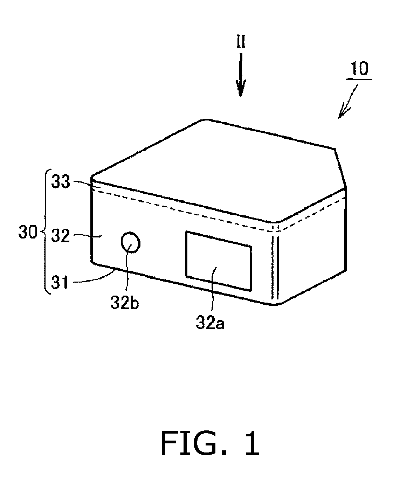

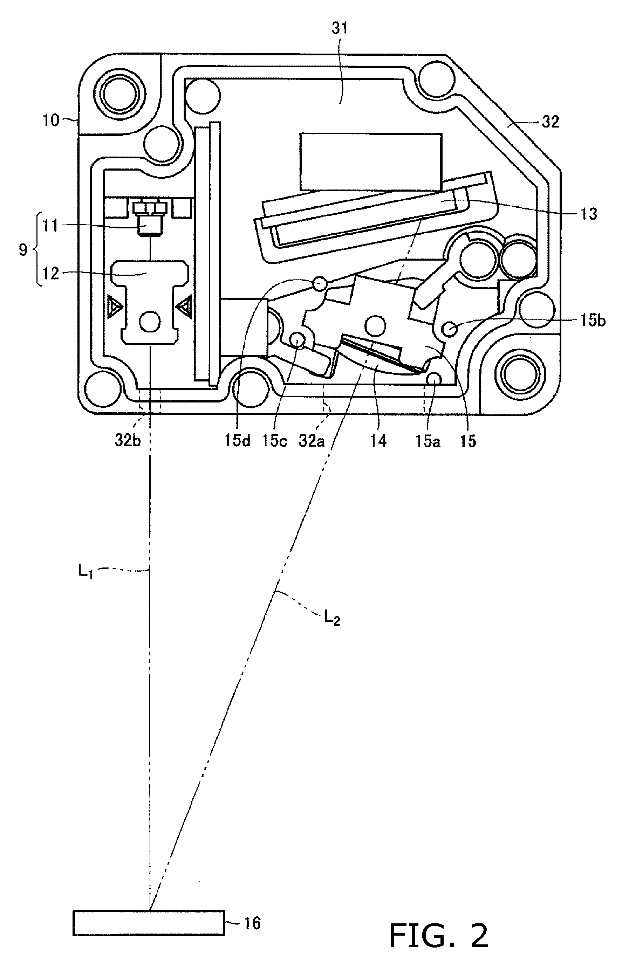

The method for adjusting an optical displacement sensor according to an embodiment of the present invention will be described with reference to the drawings. FIG. 1 is a perspective view showing the outside of the optical displacement sensor 10. FIG. 2 is a plan view from the direction of the arrow II in FIG. 1, showing a case in which a cover 33 of the optical displacement sensor 10 shown in FIG. 1 is removed. In addition to the plan view of the optical displacement sensor 10, FIG. 2 also shows an object to be measured 16. As shown in FIGS. 1 and 2, the optical displacement sensor 10 measures the displacement of the object to be measured 16. In the optical displacement sensor 10, a projection module 9 for emitting light in a desired beam shape to the object to be measured 16, a light-receiving element 13 for receiving reflected light from the object to be measured 16, the reflected light being formed by light from the projection module 9, and a light-receiving lens 14 positioned between the object to be measured 16 and the light-receiving element 13 are provided inside a substantially rectangular housing 30. The projection module 9 includes a light source 11 for emitting light, and a projection lens 12 positioned between the object to be measured 16 and the light source 11. The projection module 9, the light-receiving element 13, and the light-receiving lens 14 constitute a predetermined optical system. The three-dot chain lines in FIG. 2 indicate the optical axis of the projection module 9, i.e., the projection axis L₁, along which the light rays emitted by the projection module 9 travel, and the optical axis, i.e., the light-receiving axis L₂, of the light-receiving lens 14 for receiving the reflected light from the object to be measured 16

The housing 30 has a bottom surface 31 disposed at the bottom on which the members constituting the optical system of the optical displacement sensor 10 are fixed, and openings 32a, 32b, and includes a side wall 32 disposed so as to surround the peripheral edge of the bottom surface 31, and a cover 33 disposed opposite the bottom surface 31. The bottom surface 31 is flat, and the light source 11 and other components are fixed thereon. The side wall 32 is configured so as to have a connecting part (not shown) to which a cable or the like can be connected. The opening 32a is provided opposite the light-receiving lens 14, and the opening 32b is provided opposite the projection lens 12.

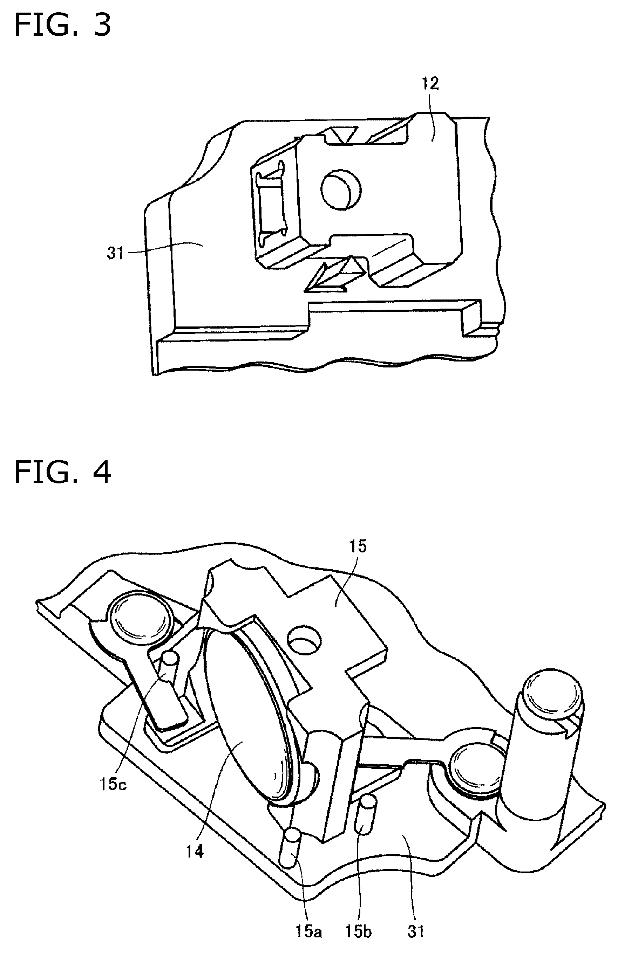

FIG. 3 is a perspective view showing the projection lens 12. FIG. 4 is a perspective view showing the light-receiving lens 14. As shown in FIGS. 1 through 4, the light source 11 is a laser diode which emits a laser beam to the object to be measured 16. The projection lens 12 includes a lens holder for accommodating a lens, and collects the light emitted from the light source 11 and adjusts the shape of the light from the light source 11 to form a predetermined shape. The light-receiving element 13 is a CCD (Charge Coupled Device) sensor in which the reflected light from the object to be measured 16 is received on a light-receiving face. A plurality of light-receiving elements is arranged in a line on the light-receiving face. The light-receiving lens 14 is a single lens having an aspherical surface on which the reflected light is incident, for example, and is accommodated in a lens holder 15. The light-receiving lens 14 collects the reflected light from the object to be measured 16 and images the light on the light-receiving face. The light-receiving lens 14 is disposed so that the light-receiving axis L₂ passes through the center of the light-receiving lens 14, and the principal face of the light-receiving lens 14 is orthogonal to the light-receiving axis L₂.

The lens holder 15 accommodates the light-receiving lens 14 so that the peripheral edge of the light-receiving lens 14 is sealed in four places, for example, the surface of the lens holder 15 adjacent to the bottom surface 31 is flat, and the shape of the lens holder 15 as viewed from the direction of the arrow II is substantially rectangular. Pins 15a through 15d are fixed to the bottom surface 31 in four locations around the lens holder 15. The four pins 15a through 15d are disposed so as to correspond to the corners of the substantially rectangular shape of the lens holder 15, and are positioning members for when the lens holder 15 is moved.

In the optical displacement sensor 10, when a laser beam is emitted from the light source 11 of the projection module 9, the emitted light reaches the object to be measured 16 via the opening 32b of the side wall 32 and is reflected by the object to be measured 16. The reflected light from the object to be measured 16 is incident on the light-receiving lens 14 via the opening 32a of the side wall 32, and the light-receiving lens 14 images the reflected light on the light-receiving face. The position of the image received when the light is imaged is then detected. The optical displacement sensor 10 thereby measures the displacement of the object to be measured 16 in the direction of the projection axis L₁.

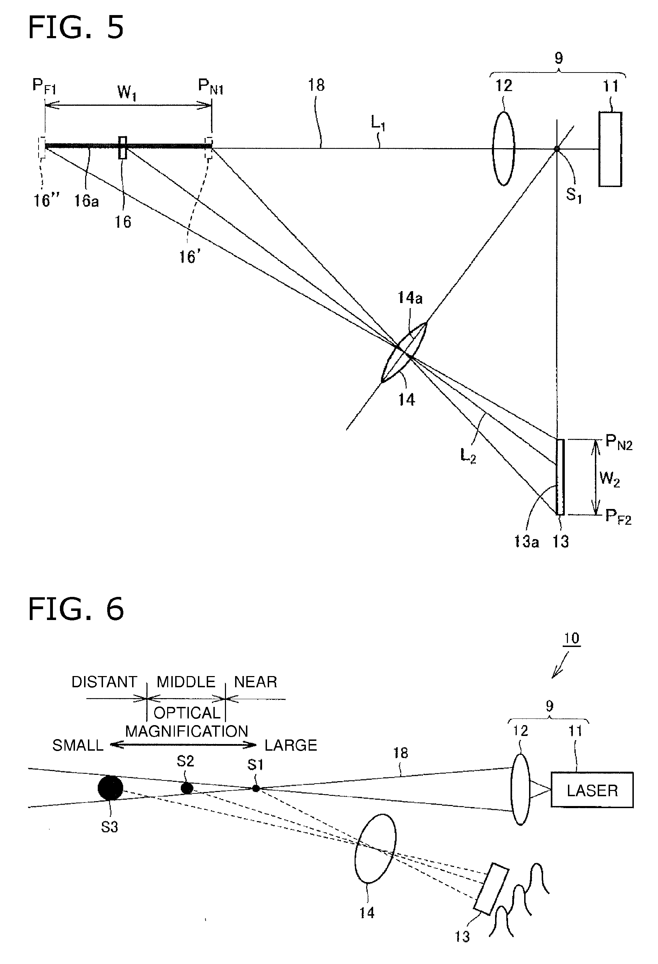

In this optical displacement sensor 10, the arrangement of the projection lens 12, the light-receiving element 13, and the light-receiving lens 14 is adjusted so as to meet the Scheimpflug condition. FIG. 5 is a schematic view showing the optical displacement sensor 10. Specifically, the optical displacement sensor 10 has a predetermined measurement range W₁ in which the displacement of the object to be measured 16 can be measured, as shown in FIG. 5. This predetermined measurement range W₁ indicates the reflection position 16a of light reflected by the object to be measured 16, and is the range from a first position P_{N1} near the light source 11 on the projection axis L₁ to a second position P_{F1} distant from the light source 11. Specifically, the reflection position 16a of the light reflected by the object to be measured 16 has a width in the predetermined measurement range W₁ on the projection axis L₁. The object to be measured 16' at the first position P_{N1} and the object to be measured 16" at the second position P_{F1} are indicated by dotted lines in FIG. 5, and the reflection position 16a of light, which is the predetermined measurement range W₁, is indicated by a heavy line. The predetermined measurement range W₁ is 20 to 30 mm, for example. A light-receiving face 13a of the light-receiving element 13 has a predetermined width W₂, corresponding to the predetermined measurement range W₁, from a position P_{N2} near the light source 11 to a position P_{F2} distant from the light source 11.

The configuration of the optical displacement sensor 10 is adjusted so that a predetermined optical system meets the Scheimpflug condition, i.e., so that lines extending from the reflection position 16a (projection axis L₁) for the object to be measured 16, a principal face 14a of the light-receiving lens 14, and the light-receiving face 13a of the light-receiving element 13 intersect at a single point S₁. By this adjustment in the optical displacement sensor 10, focus is achieved on the light-receiving face 13a during imaging, irrespective of the position at which the light is reflected in the measurement range W₁. The optical displacement sensor 10 thus measures the displacement of the object to be measured 16 in the measurement range W₁.

The method for adjusting a projection beam 18 through use of the projection lens 12 in this embodiment will next be described. FIG. 6 is a view showing the relationship among the spot diameters S1 -S3, the optical magnification, and the image size when the projection beam 18 is adjusted in the present embodiment. The actual relationship between the position of the object to be measured 16 according to the projection beam 18 and the image on the CCD, which is the light-receiving portion 13, is as shown in FIG. 5, but the relationship here is simplified in the manner shown in FIG. 8 for the prior art example in order to facilitate understanding of the present invention.

As shown in FIG. 6, in the optical displacement sensor 10 of the present embodiment, the arrangement of the projection lens 12, the light-receiving portion 13, and the light-receiving lens 14 is adjusted so that the Scheimpflug condition is met, the same as in the prior art example shown in FIG. 8.

In the present embodiment, in order to reliably detect the image on the light-receiving portion 13, adjustment is made so that the image formed on the light-receiving portion 13 is formed on a plurality of photodiodes which constitutes the light-receiving portion 13, and the width of the image is the same (1 in this case). Here, for example, adjustment is made so that the image is formed on three or more photodiodes. This adjustment state is shown in Table 2.

As described above, the image size is the product of the spot diameter and the magnification. In the Scheimpflug arrangement thus configured, the magnifications at the near position, the middle position, and the distant position are 0.3, 0.25, and 0.2, for example, as shown in the magnification column of Table 2. The spot diameters S1 - S3 meeting this condition can be calculated from the same sizes/magnifications, i.e., 1/0.3, 1/0.25, and 1/0.2, respectively, and are 3.3, 4.0, and 5.0, respectively. Specifically, the optical system of the projection beam may be adjusted so that the spot diameters increase in order from near to distant, as indicated by S1 - S3 in FIG. 1. In this example, adjustment is made to give a ratio of 1:1.2:1.5 for the spot diameters.

In order to obtain such spot diameters, the focal position of the projection beam 18 emitted from the projection lens 12 may be adjusted so as to be slightly on the "distant" side of the "near" position.

**[Table 2]**

| Spot diameter | | Magnification | Image size |
|---|---|---|---|
| S1 (near): | 3.3 | 0.3 | 1.0 |
| S2 (middle): | 4.0 | 0.25 | 1.0 |
| S3 (distant): | 5.0 | 0.2 | 1.0 |

In the embodiment described above, a case is described by way of example in which the focal position is such that the size of the image is constant and the image formed on the light-receiving portion 13 is formed on three of the photodiodes of the CCD that constitutes the light-receiving portion 13. However, the present invention is not limited by this example.

The reason for adopting this configuration is that the beam diameter can become too large, power may decrease, and other reductions in performance can occur when the focal position is adjusted until the image size is constant irrespective of the distance between the projection lens and the object to be measured, i.e., when a beam is formed in accordance with the beam size ratio of the projection beam. Consequently, the desired measurement results can be adequately obtained merely by forming an image on the plurality of photodiodes of the CCD that constitutes the light-receiving portion 13.

The plurality of photodiodes is described above as being three photodiodes, but the number of photodiodes is preferably five or greater in order to achieve consistent measurement precision.

In the embodiment described above, a case is described in which the size of the image is expressed as "spot diameter × magnification," and adjustment is made so that this size is constant. However, this assumes an ideal optical system in which no aberration occurs. Since aberration occurs in the actual projection lens, the size of the image is expressed as "spot diameter × magnification + aberration of optical system." Consequently, an image size obtained by taking aberration into account is more preferred for use.

A case is described in which the projection beam is a laser light in the embodiment described above, but this configuration is not limiting, and the projection beam may be formed by LED illumination or the like.

In the embodiment described above, the optical magnification has specific values at the "near" position, the "middle" position, and the "distant" position, but these values vary according to the Scheimpflug optical system.

The method for adjusting so that the size of the image formed on the light-receiving portion is substantially the same is not described in detail in the embodiment described above, but a configuration may be adopted in which a "near" position, a "middle" position, and a "distant" position are specified in advance and images for these positions are formed to determine a constant image size, and the focal position is automatically adjusted to match this size or a larger size.

The light-receiving portion is a CCD sensor in the embodiment described above, but this configuration is not limiting, and the light-receiving portion may also be a CMOS (Complementary Metal Oxide Semiconductor) sensor.

An embodiment of the invention was described above with reference to the drawings, but the present invention is not limited to the embodiment shown in the drawings. Various revisions and/or modifications within a scope the same as or equivalent to that of the present invention may be made to the embodiment shown in the drawings.

### INDUSTRIAL APPLICABILITY

The present invention is useful in adjusting an optical displacement sensor.

### REFERENCE SIGNS LIST

- 9: projection module
- 10: optical displacement sensor
- 11: light source
- 12: projection lens
- 13: light-receiving portion
- 14: light-receiving lens
- 16: measured obj ect
- 18: projection beam

## Claims

1. A method for adjusting a projection beam of an optical displacement sensor having a projection lens configured to project light onto an object to be measured,
the optical displacement sensor having a light-receiving portion configured to receive reflected light reflected by the object to be measured and a light-receiving lens configured to image the reflected light onto a light-receiving face, the light-receiving lens being positioned between the object to be measured and the light-receiving portion,
the method comprising:
arranging the projection lens, the light-receiving portion, and the light-receiving lens so that the Scheimpflug condition is met; and
adjusting the focal position of light emitted from the projection lens so that a size of an image formed on the light-receiving portion by the reflected light is constant irrespective of the distance between the projection lens and the object to be measured.

2. The method for adjusting the projection beam according to claim 1, wherein
the projection beam is a laser beam.

3. The method for adjusting the projection beam according to claim 1 or 2, wherein
the size of the image is determined by the product of a spot diameter of the object to be measured and an optical magnification determined according to a ratio of the size of the image formed on the light-receiving portion to the spot diameter of the object to be measured, the spot diameter being formed by the projection beam.

4. The method for adjusting the projection beam according to any of claims 1 to 3, wherein
the step of adjusting the focal position of light emitted from a light source so that the size of the image formed on the light-receiving portion is constant irrespective of the distance between the light source and the object to be measured includes
a step of performing an adjustment so that the image formed on the light-receiving portion has a size to be formed on at least three or more photodiodes among a plurality of photodiodes constituting the light-receiving portion.

5. A method for adjusting a projection beam of an optical displacement sensor having a projection lens configured to project light onto an object to be measured,
the optical displacement sensor having a light-receiving portion configured to receive reflected light reflected by the object to be measured and a light-receiving lens configured to image the reflected light onto a light-receiving face, the light-receiving lens being positioned between the object to be measured and the light-receiving portion,
the method comprising:
arranging the projection lens, the light-receiving portion, and the light-receiving lens so that the Scheimpflug condition is met; and
adjusting the focal position of light emitted from the projection lens so that an image formed on the light-receiving portion by the reflected light has a size to be formed on a plurality of photodiodes constituting the light-receiving portion irrespective of the distance between the projection lens and the object to be measured and the image formed on the light-receiving portion.
